# EUROPEAN PATENT APPLICATION

(11) **EP 1 933 242 A1**
(43) Date of publication of application: **18.06.2008**
(21) Application number: 07122345.7
(22) Date of filing: 05.12.2007
(51) Int. Cl.: G06F 17/30

(54) **A method for ensuring internet content compliance**

(30) Priority: 11.12.2006 US 873960 P
(71) Applicant: Sitecore A/S, 1613 Copenhagen V (DK)
(72) Inventor: Christensen, Jakob Hjort, 2770, Kastrup (DK)
(74) Representative: Inspicos A/S

(57) **Abstract**

A method for managing web content for a web page in such a manner that Internet content compliance and accessibility is ensured. The method comprises the step of validating the web content and/or the web page with respect to compliance and/or accessibility by accessing one or more external locations. The validation is performed as an automatically initiated background process, and it is thereby ensured that the validation takes place. I n the case that the validation reveals that a noncompliant and/or an inaccessible element is present in the web content and/or the web page, a compliance warning and/or an accessibility warning is generated and displayed to the user.

The method of the invention ensures that the web content and/or the web page is compliant with certain rules or requirements, e.g. legislative requirements, official standards, corporate policy, etc., and that it is accessible, e.g. for disabled persons.

## Description

### FIELD OF THE INVENTION

The present invention relates to a method for helping to ensure that content (data) meets any possible requirements before being published to and/or delivered from a web server to another device over the internet such as a web browser or PDA. While the invention is focused on common technical standards such as markup validation and semantic standards such as accessibility for users with disabilities, it provides an open framework which can be used to implement arbitrary rules to enforce any requirements having to do with any type of data compliance for web content including business cases such as profanity exclusion.

### BACKGROUND OF THE INVENTION

More and more countries around the world legislate on the creation of standards-compliant, accessible websites. For example public sector websites must adhere to various accessibility criteria in order that citizens with disabilities can use public sector websites.

It is no less important for private companies, because a percentage of the potential customer base has various disabilities, but often it is considered too expensive or too time consuming to make accessible websites which conform to technical standards and various specific business requirements.

There are also various technical standards for HTML and XHTML markup. While a web browser can often render a page which is not in strict compliance with these standards, other devices such as PDAs and screen readers for users with disabilities may not function as well with poorly crafted markup.

Additionally, many organizations have specific compliance standards for all content available publicly, such as consistent tense, voice and/or grammatical person, the exclusion of profanity, terms trademarked by competitors or any other general conditions and/or restrictions.

Furthermore, there are many different standards around the world, some more complex than others, and these standards are frequently changed. It is often necessary for a multinational organization's websites to conform to multiple standards defined by different organizations, for instance markup requirements defined by the W3C and accessibility requirements defined by the US government and other bodies, while also enforcing corporate standards such as the exclusion of profanity.

Two primary processes are undertaken to create a website. The first is the technical task of building the site infrastructure code and the second is updating that created site with new information (pages). Often the creation of new web pages is handled by "web Content Management Systems", i.e. tools designed to help content authors (often designated "editors", but in the present context referred to as "users") create new content for the website, e.g. by taking the content of a Microsoft Word® document and presenting that content on a web page.

Even today it is notoriously difficult not only to create standards-compliant, accessible websites, but it is equally difficult to ensure that when new or updated content is placed on a website, the website remains compliant and accessible.

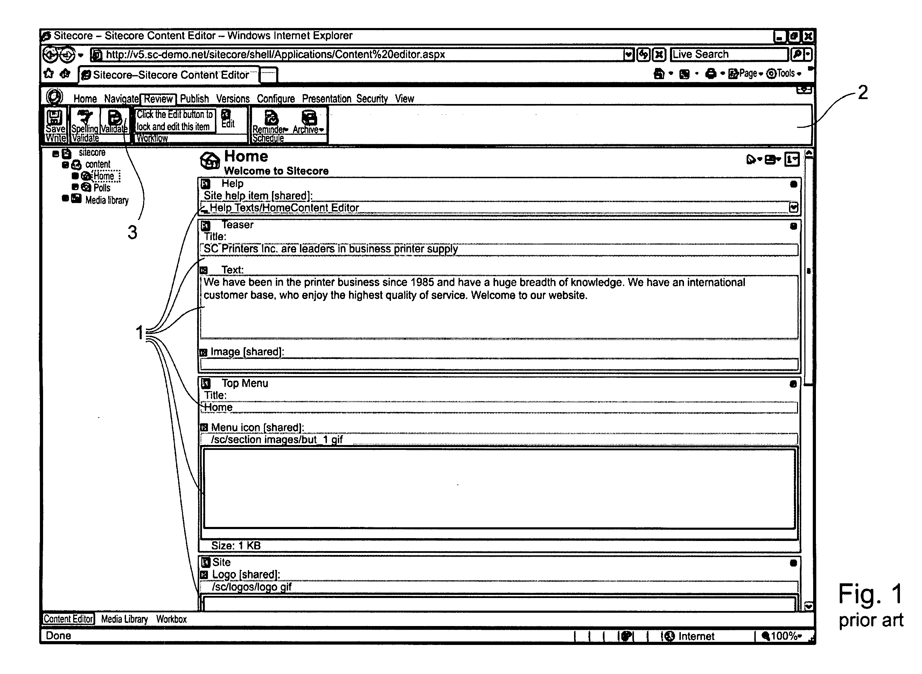

Many prior art web Content Management Systems seek to help a user in creating standards-compliant, accessible content. Fig. 1 shows a screen capture of an example content editing interface from such a system. The interface shown in Fig. 1 is used to manage content which will ultimately appear on web pages of a website. In the screen capture of Fig. 1 , the user has opened the document "Home" in the content editor, and on the right hand side all of the content fields 1 associated with the "Home" document are visible. As an alternative, this could, e.g., also have been just one single rich text field. In top menu 2 a validate button 3 is present. This button 3 could be used to check the level of accessibility, validity and/or compliance of a web page or content component.

Note that in the description below, the button label "Validate" relates to the user action of checking content against all criteria including markup validation, accessibility and other general compliance requirements.

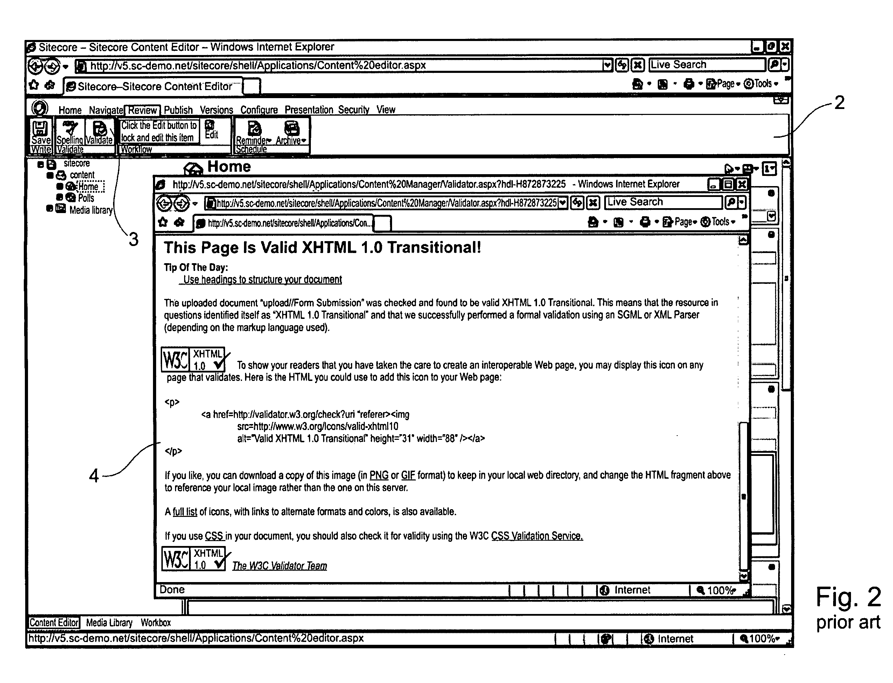

Fig. 2 is a screen capture of the content editing interface of Fig. 1 in the case where the validate button 3 has been pressed. Upon pressing the validate button 3 the system checks created web content and/or web pages against various standards. This may, e.g., be done by accessing various local or remote locations comprising information of various requirements, and evaluating the web content in terms of these requirements. Following this process, the system has opened a web browser dialogue box 4, which shows the results of checking compliance of the web content. In this example the web content was evaluated using the W3C validation service, but this could just as well have been checked using the "Bobby" tool for checking accessibility or using any other local or remote content evaluation facility.

A similar, but different, example of how an existing web Content Management System could assist users in creating accessible, valid and compliant content could be as follows. When a user has created content and submitted such content to approval through an approval publication workflow process, the workflow mechanism checks for possible compliance issues and directs the content through additional workflow processes allowing correction content through additional workflow processes allowing correction of any non-compliant or non-valid content, if any is detected.

In the more technical field of site infrastructure development, programmers developing source code must adhere to programming language syntaxes. Even a single-character error in source code can make it impossible to compile and use by generating a syntax error.

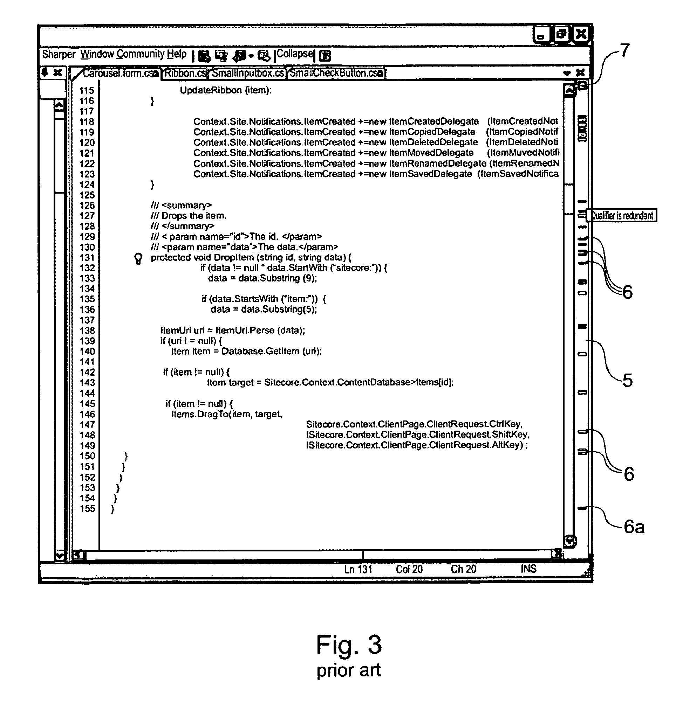

Existing developer tools make programmers' daily work easier by applying a "syntax checker bar". Fig. 3 is a screen capture showing an interface of such a tool. I n Fig. 3 a syntax checker bar 5 appears at the right hand side of the screen. In the example shown, the programmer has a source code file of more than 5000 lines open in his source code editor. The syntax checker bar 5 makes it possible for the developer to instantly see what errors are present in his source code that would, e.g., generate a compile time error. In the syntax checker bar 5 shown in Fig. 3 errors are illustrated by means of horizontal markers 6 on the syntax checker bar 5, the position of a marker 6 indicating the relative position of the corresponding error in the source code. At the top of the syntax checker bar 5, a little square symbol 7 indicates overall if there are any errors in the source code. This is practical, since one small horizontal marker 6 could easily be overlooked. Also, as mentioned above, the syntax checker bar 5 shows the locations of errors in the entire source code relative to their location. So for example, the bottom horizontal marker 6a represents an error in line 4,578 of the source code. This line is not viewable in the current section of the source code editor. Taking an action such as double-clicking that marker 6a would move the editor/cursor to the location of the problem in the source code.

### SUMMARY OF THE INVENTION

### Definitions

All variations of the terms "web" and "Internet" refer to the electronic communications network which connects computers and other devices around the world.

All variations of the terms "data", "content" and "web page" refer to information or applications such as text, images, form elements, sound, video and other data types rendered in the context of a website or other application accessed over the Internet.

All variations of the term "web site" refer to a collection of content items made available over the Internet by an individual, company, educational institution, government or other organization.

All variations of the term "standards" refer to technical and semantic guidelines or other criteria defined by parties such as the US government or the World Wide Web Consortium (W3C) related to the accessibility, technical validity or other attributes of web content.

All variations of the term "well-formed" refer to markup such as XML or XHTML which conforms to certain technical standards which generally don't affect its meaning.

All variations of the term "accessible" refer to content which is equivalently available to all persons, including those with disabilities.

The term "valid" in general refers to data which adheres to some number of technical rules such as being well-formed, but in some cases could include other requirements such as accessibility or general compliance rules. When possible without adversely affecting readability, variations of the term "check" has been used for this purpose.

All variations of the term "compliant" refer to content which meets some number of requirements including accessibility, validity and/or any other rules such as the exclusion of profanity.

All variations of the term "Section 508" refer to the US Rehabilitation Act of 1973, as amended (29 U.S.C. 794d) mandating that US federal agencies provide those with disabilities reasonable access to information technology comparable in effect to that of those without disabilities. Section 508 can be found at http://www.section508.gov.

All variations of the term "WCAG" refer to any priority level in the W3C's Web Accessibility Initiative's (WAI's) Web Content Accessibility Guidelines version 1.0. This is further described at http://www.w3.org/TR/WCAG10/.

All variations of the term "online validation" refer to using websites providing internet services to check content against any requirements, such as the Center for Applied Special Technology's "Bobby" tool, WatchFire's WebXACT or the W3C's markup validation service.

All variations of the term "offline validation" refer to using tools or algorithms which check content against any requirements locally in the content editorial environment without invoking any external site or service.

The following excerpt from section 1194.22 of Subpart B - Technical Standards in the Section 508 standards documented at http://www.section508.gov/index.cfm?FuseAction=content&ID=12 describes requirements relevant to the present invention. According to these standards for web content accessibility:
(a) A text equivalent for every non-text element shall be provided (e.g., via "alt", "longdesc", or in element content).
(b) Equivalent alternatives for any multimedia presentation shall be synchronized with the presentation.
(c) Web pages shall be designed so that all information conveyed with color is also available without color, for example from context or markup.
(d) Documents shall be organized so they are readable without requiring an associated style sheet.
(e) Redundant text links shall be provided for each active region of a server-side image map.
(f) Client-side image maps shall be provided instead of server-side image maps except where the regions cannot be defined with an available geometric shape.
(g) Row and column headers shall be identified for data tables.
(h) Markup shall be used to associate data cells and header cells for data tables that have two or more logical levels of row or column headers.
(i) Frames shall be titled with text that facilitates frame identification and navigation.
(j) Pages shall be designed to avoid causing the screen to flicker with a frequency greater than 2 Hz and lower than 55 Hz.
(k) A text-only page, with equivalent information or functionality, shall be provided to make a website comply with the provisions of this part, when compliance cannot be accomplished in any other way. The content of the text-only page shall be updated whenever the primary page changes.
(l) When pages utilize scripting languages to display content, or to create interface elements, the information provided by the script shall be identified with functional text that can be read by assistive technology.
(m) When a web page requires that an applet, plug-in or other application be present on the client system to interpret page content, the page must provide a link to a plug-in or applet that complies with §1194.21 (a) through (I).
(n) When electronic forms are designed to be completed on-line, the form shall allow people using assistive technology to access the information, field elements, and functionality required for completion and submission of the form, including all directions and cues.
(o) A method shall be provided that permits users to skip repetitive navigation links.
(p) When a timed response is required, the user shall be alerted and given sufficient time to indicate more time is required.

While not all of these points may be applicable to the intent of the present invention, most of them are. For instance the invention could help the user enter details to make the content accessible such as by forcing the entry of alternate text for all non-text visual elements, warning users about image map conditions, requiring row and column headings as well as textual guides for form elements, preventing the user from inserting scripting components without providing text describing their functionality or enforcing any other compliance and accessibility requirements.

The following excerpt from the W3C's WAI's Web Content Accessibility Guidelines documented at http://www.w3.org/TR/WAI-WEBCONTENT/ describes requirements relevant to the present invention:
1. Provide equivalent alternatives to auditory and visual content.
2. Don't rely on color alone.
3. Use markup and style sheets and do so properly.
4. Clarify natural language usage.
5. Create tables that transform gracefully.
6. Ensure that pages featuring new technologies transform gracefully.
7. Ensure user control of time-sensitive content changes.
8. Ensure direct accessibility of embedded user interfaces.
9. Design for device-independence.
10. Use interim solutions.
11. Use W3C technologies and guidelines.
12. Provide context and orientation information.
13. Provide clear navigation mechanisms.
14. Ensure that documents are clear and simple.

The following resources provide additional specifics for WCAG relevant to the present invention:

### • http://www.w3.org/TR/WCAG10-CORE-TECHS/

### • http://www.w3.org/TR/WCAG10-HTML-TECHS/

### • http://www.w3.org/TR/WCAG10-CSS-TECHS/

While not all of these points may be applicable to the intent of the present invention, most of them are. The invention could help the user enter details to make the content accessible such as through the techniques described above regarding compliance with Section 508 standards.

It is an object of the invention to provide a method for managing web content in a manner which ensures valid, compliant and accessible web content in an easy manner.

It is a further object of the invention to provide a method for managing web content in a manner which preserves validity, compliance and accessibility of the web content during editing of the web content.

According to the invention the above and other objects are fulfilled by providing a method for managing web content for a web page, the method comprising the steps of:
- providing a content editor for managing web content for the web page, said content editor comprising a user interface,
- providing to the content editor, web content to be presented on the web page,
- validating said web content and/or said web page with respect to compliance and/or accessibility by accessing one or more external locations, said validation being performed as an automatically initiated background process,
- generating a compliance warning and/or an accessibility warning in the case that said validating step reveals that a noncompliant and/or an inaccessible element is present in the web content and/or the web page, and
- displaying said compliance warning and/or said accessibility warning via the user interface of the content editor.

In the present context the term "content editor" should be interpreted to mean a program which a user uses when creating and/or editing web content for a web page. This takes place via the user interface.

The web content could be any suitable content which it is desired to distribute from a web server, e.g. in the context of a browser requesting a web page. Thus, the web content could include, but is not limited to, text files, audio files, images, links, documents, such as PDF documents or Word documents, database records or other types of data record stored on a computer and served by a web server, etc., each containing information or the like which it is desired to display or make available via the web page.

The web content and/or the web page is validated with respect to compliance and/or accessibility. This should be interpreted to mean that it is investigated whether or not the web content and/or the web page fulfils certain requirements regarding compliance as defined above, and/or accessibility for disabled persons. These requirements may be defined by legislative requirements of one or more countries, and/or it may include requirements belonging to one or more official standards, etc.

Thus, the validation is not simply a "syntax checker". Besides a standard "syntax" check, the validation step can query various Internet based services to confirm that web content/pages are valid, accessible and/or compliant. For example accessing the W3C's markup validation services or, for example, the online Bobby service.

Additionally, validating content could both validate the content at the content level (e.g. is this image and image caption accessible or does the image have a caption), and also at the web page level (e.g. are this image and this image caption accessible when shown in the layout design for a mobile device, in Microsoft Internet Explorer® and/or a Mozilla Firefox browser).

Validating compliant and/or accessible content is not always strictly syntactic, but sometimes semantic rules apply. For example, in some circumstances a picture with no specific caption may be considered inaccessible, and in other circumstances it may be considered acceptable. This could be called a compliance "warning" or an accessibility "warning", and the user could be informed visually of the warning (perhaps using a warning symbol), and possibly be allowed to either dismiss the warning or to correct the issue.

Different levels within the standard may be enforced, for instance requiring XHTML transitional or XHTML strict. Checking not only encompasses syntax and accessibility standards such as XHTML and Section 508, but could include any logical technical or business requirements. In many cases it will be necessary to enforce multiple constraints on a single page or other unit of data. The system could require the user to enter appropriate metadata such as title and description for each content item, to correct spelling and grammar errors and warnings, to assist with consistency in terminology and/or voice, to remove any profanity, to address any broken links or other broken references and/or to complete translation into another language. Accessibility standards may require entry of all content in alternate formats such as providing alternate text for all images, including captions or providing a transcript of video or an audio voice recording of text, ensuring content is available for alternate input/output devices and/or supporting other assistive technologies, or requiring appropriate identifiers for all user interface elements.

The validation is automatically initiated. This should be interpreted to mean that the validation is initiated without the user having to actively perform actions, such as pressing a validation button. Thereby it is ensured that performing the validation is not dependent on whether or not the user remembers to press a button or the like, and accordingly it is ensured that the web content and/or the web page is always validated. The validation may be initiated by another action performed by the user, e.g. a user entering new web content or editing web content which is already present. Alternatively, the validation may be initiated simply by a user opening the content editor, but without entering or editing web content. In this case the validation will take place on web content which has already been validated. However, the requirements may have changed since the last validation, e.g. due to altered legislation or because the location of a link has changed, and it may therefore, nevertheless, be relevant to validate the web content and/or the web page. Furthermore, the validation may be initiated at regular time intervals. Furthermore, the validation may be initiated when the user saves and/or submits data to the next step of its workflow, e.g. in order to publish the data. Additionally, validation errors could for example prevent the user from saving and/or submitting data to the next step of its workflow. Additionally, validation errors could for example automatically route content submitted to workflow to a different workflow step than publishing, or prevent the user from submitting data to the next step of its workflow, instead requiring the user to submit data to another workflow step. It is, however, preferably possible to for certain users to override errors and save, submit or otherwise act on data which can't pass compliance constraints.

The validation is performed as a background process, i.e. the validation takes place while the user is doing other things, e.g. editing the web content or creating new web content. This is an advantage because the user is thereby alerted with respect to possible compliance and/or accessibility related problems as he/she performs the editing or creating of web content, and potential problems may therefore be solved immediately and before the edited/created web content is made available via the web page.

Based on the outcome of the validating step a compliance warning and/or an accessibility warning is generated, if it is revealed that a noncompliant and/or inaccessible element is present. It should be noted that the compliance warning and/or accessibility warning could indicate that an error, i.e. something which must be corrected before moving to the next step of the editorial process, has occurred, or that a warning, i.e. something which the user should check, e.g. checking an attribute of the page, in order to ensure that it is correct, and otherwise correct it, has occurred.

The compliance warning and/or the accessibility warning is displayed via the user interface of the content editor. Accordingly, the user will immediately, or at least as quickly as possible, discover if any compliance and/or accessibility related problems are present in the web content or the web page. Furthermore, this information is presented in a manner which makes it very easy for the user to discover the problems and handle them in an appropriate manner. This is very advantageous.

In summary, the invention thus uses displayed warnings combined with online Internet services, to make it very easy for users to create and maintain compliant and accessible content for web sites. At a glance, any user is able to instantly know, whether or not the changes they made to web content caused any compliance and/or accessibility errors, and at a glance, they will know when the error is properly fixed.

It should be noted, that the invention could also be used for other applications than checking compliance and/or accessibility as described above. It could also be envisaged that the method of the invention could be used for enforcing business processes, e.g. with respect to certain requirements to document formats, contents, etc. It may, e.g., be applied to medical case books, etc.

The step of displaying may comprise displaying at least one visual indicator. In this case the at least one visual indicator may have a visual appearance being indicative of the nature of the generated compliance warning and/or accessibility warning. The visual indicator(s) may have various colours, patterns, shapes, or other design attributes, each indicating the nature of the corresponding compliance warning and/or accessibility warning. For instance, a red rectangle could indicate a compliance error or an accessibility error, and a yellow rectangle could represent a compliance warning or an accessibility warning. Green could indicate compliant and accessible data. This makes it very easy for the user to identify the nature of the problem, and this makes it much easier for the user to make appropriate corrective actions. Different types of issues could be handled in different ways, such as a warning appearing in the user interface, versus an error preventing the user from saving, submitting the content to workflow or approving content for publication.

Alternatively or additionally, the step of displaying may comprise displaying a validation bar representing the entire web content. Such a validation bar is similar to the syntax bar known from the field of programming and described above. Thus, the validation bar can quickly show a user if there are any problems with the web content being created or edited, either in the web content itself or in the context of the one or more web pages in which the web content will ultimately appear. Since the validation bar represents the entire web content, the user can easily see if a problem is present as well as the approximate location in the web content.

As an alternative, any other suitable kind of indicator may be displayed, such as playing a sound. Possibly the user could be prevented from saving the content being worked on, or prevented/limited in submitting such content to workflow processes.

The method may further comprise the step of displaying a symbol via the user interface of the content editor in the case that the validating step reveals that at least one noncompliant and/or inaccessible element is present in the web content and/or the web page. According to this embodiment the user may at a glance establish whether or not a compliance and/or an accessibility related problem exists somewhere in the web content and/or the web page. In the case that the symbol indicates that a problem has occurred, the user may then investigate the web content further to establish where the problem has occurred as well as the nature of the problem. This is in particular advantageous in the case that the visual indicator comprises a validation bar and in the case that the web content is relatively extensive. In this case a single compliance warning and/or accessibility warning may easily be overlooked by the user, and it is therefore an advantage that he/she only has to look in one position in order to establish whether or not one or more problems occurred.

According to one embodiment, performing a specific mouse action at a position of the user interface of the content editor corresponding to a displayed compliance warning and/or accessibility warning may result in a tool-tip being displayed via the user interface. Thereby the user can easily gain information relating to the nature of the problem and, possibly, to a possible solution. The specific mouse action may, e.g., be causing the mouse cursor to hover over a specific position, or clicking one or more of the mouse buttons.

Alternatively or additionally, performing a specific mouse action at a position of the user interface of the content editor corresponding to a displayed compliance warning and/or accessibility warning may result in the focus being moved to the content location of said displayed compliance warning and/or accessibility warning. According to this embodiment the user is easily redirected to the position in the web content where a specific problem occurred. Thereby the user can easily establish the nature of the problem and solve it. In this case the specific mouse action may advantageously be or comprise clicking one or more of the mouse buttons.

At least one external location may be a web service, such as governmental web services or other validation services, such as the W3C validation or the online Bobby accessibility compliance checking service. Alternatively, an external location may be positioned at a server which the user may gain access to via an internal network, e.g. an intranet. Such a server may be updated on a regular basis relatively to various requirements which must be fulfilled, and multiple users/content editors may be able to gain access to the server. Additionally to accessing one or more external facilities, the validation process may also access local locations. In this case the validation may comprise checking for syntax errors or the like, and requirements in this regards may advantageously be stored locally.

The validation step may be performed as a real time process, or at least as close to real time as possible. In this case the user will instantly know if created or edited web content contains errors or compliance or accessibility related problems.

The method may further comprise the step of defining one or more compliance rules and/or one or more accessibility rules, and the validating step may be performed in accordance with said defined rule(s). According to this embodiment a person, most likely a software developer, defines the compliance rules and/or the accessibility rules which are used when validating the web content and/or the web page. The compliance rules and/or accessibility rules specify which issues or inconsistencies should be regarded as 'noncompliant' or 'inaccessible', i.e. which issues should give rise to the generation of a warning. Thus, these rules specify how the validating step should be performed.

Alternatively or additionally, the method may further comprise the step of a user selecting one or more compliance rules and/or one or more accessibility rules from a group of compliance rules and/or accessibility rules, and the validating step may be performed in accordance with said selected rule(s). The group of rules may advantageously be defined by a developer as described above. According to this embodiment, the user, i.e. the person creating and/or editing the web content and/or web page, can select which compliance rules and/or which accessibility rules should apply to the specific web content and/or web page which that user is creating/editing.

The method may further comprise the step of associating each selected rule with at least one content field and/or with at least one content type, and the validating step may be performed in such a manner that each selected rule is applied to content fields and/or content types to which it is associated. This step is typically performed by a user, such as an administrator type of user. According to this embodiment the administrator user can choose that a selected rule should only apply to certain parts of the web content and/or the web page, such as only to specific content fields and/or only to specific content types. For example, an administrative user may define that (all) image fields for a given content type in the content editor are validated using a rule which checks for the presence of ALT tags (xhtml compliance) and contents in the ALT tags (accessibility compliance). Furthermore, the administrative user may define that (all) rich text fields for a given content type, are checked for the presence images without ALT tags (xhtml compliance) and missing ALT tag texts (accessibility compliance), but are also checked for not being wider than 400 pixels (design compliance, e.g. a too wide picture would skew the design of the corresponding web page). The administrative user could further define a validation to run for the content type, which would validate the web page corresponding to the content type, using e.g. an accessibility validation service. The administrative user would then know that images used via the content editor will be complaint in regards to ALT tags (because all fields are verified), but the administrative user also implicitly knows that he can accept compliance warnings for e.g. blank design images with empty ALT tags (images used purely for design by the programmers building the site).

### BRI EF DESCRI PTI ON OF THE DRAWINGS

The invention will now be described in further detail with reference to the accompanying drawing in which

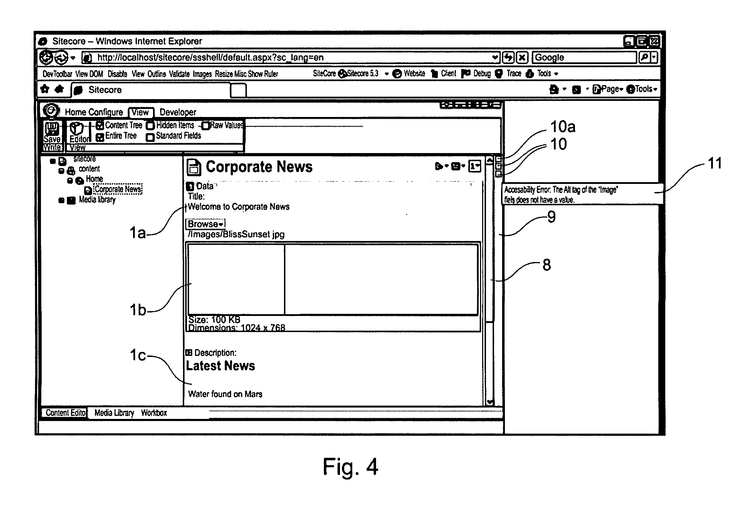

Fig. 4 is a screen capture illustrating a content editor using the method according to the invention.

### DETAILED DESCRIPTION OF THE DRAWINGS

Fig. 4 is a screen capture illustrating a content editor working with web content. The content shown in Fig. 4 happens to be divided into several content fields 1. However, it could equally have been just one single text field. Firstly a title field 1a is shown, then an image field 1 b, then a rich text field 1c. Furthermore other fields which are outside the viewable area could be present. Scroll bar 8 indicates that there are more fields and/or content in the content editor than can be shown on the screen. The scroll bar allows the user to scroll down to work with other fields.

On the right hand side of the screen a validation bar 9 is shown. The validation bar 9 visually indicates that there are accessibility related errors in the content by means of squares 10. Notice that the user has caused the mouse cursor to hover over one of the indications. A tool-tip 11 accordingly describes the nature of the warning or error corresponding to the indication. The tool-tip 11 informs the user that an ALT caption is missing on the image. The user could also choose to click the indicated error or warning, and would then be taken to the content/field/line in question, and the screen would auto-scroll if required.

The top visual indicator 10a in this example shows the overall status, i.e. it indicates that an error or warning is present somewhere in the web content. Thus, at a glance the user can always see if there are any errors on content which the user is presently working with.

When the user works with content, background processes can query Internet services, and make visual indicators appear as soon as results come back. Thus the user will experience close to real-time updating of indicators while working with content.

## Claims

1. A method for managing web content for a web page, the method comprising the steps of:
- providing a content editor for managing web content for the web page, said content editor comprising a user interface,
- providing to the content editor, web content to be presented on the web page,
- validating said web content and/or said web page with respect to compliance and/or accessibility by accessing one or more external locations, said validation being performed as an automatically initiated background process,
- generating a compliance warning and/or an accessibility warning in the case that said validating step reveals that a noncompliant and/or an inaccessible element is present in the web content and/or the web page, and
- displaying said compliance warning and/or said accessibility warning via the user interface of the content editor.

2. A method according to claim 1, wherein the step of displaying comprises displaying at least one visual indicator.

3. A method according to claim 2, wherein the at least one visual indicator has a visual appearance being indicative of the nature of the generated compliance warning and/or accessibility warning.

4. A method according to claim 2 or 3, wherein the step of displaying comprises displaying a validation bar representing the entire web content.

5. A method according to any of the preceding claims, further comprising the step of displaying a symbol via the user interface of the content editor in the case that the validating step reveals that at least one noncompliant and/or inaccessible element is present in the web content and/or the web page.

6. A method according to any of the preceding claims, wherein performing a specific mouse action at a position of the user interface of the content editor corresponding to a displayed compliance warning and/or accessibility warning results in a tool-tip being displayed via the user interface.

7. A method according to any of the preceding claims, wherein performing a specific mouse action at a position of the user interface of the content editor corresponding to a displayed compliance warning and/or accessibility warning results in the focus being moved to the content location of said displayed compliance warning and/or accessibility warning.

8. A method according to any of the preceding claims, wherein at least one external location is a web service.

9. A method according to any of the preceding claims, wherein the validation step is performed as a real time process.

10. A method according to any of the preceding claims, further comprising the step of defining one or more compliance rules and/or one or more accessibility rules, and wherein the validating step is performed in accordance with said defined rule(s).

11. A method according to any of the preceding claims, further comprising the step of a user selecting one or more compliance rules and/or one or more accessibility rules from a group of compliance rules and/or accessibility rules, and wherein the validating step is performed in accordance with said selected rule(s).

12. A method according to claim 11, further comprising the step of associating each selected rule with at least one content field and/or with at least one content type, and wherein the validating step is performed in such a manner that each selected rule is applied to content fields and/or content types to which it is associated.
